# EUROPÄISCHE PATENTSCHRIFT

(11) **EP 2 108 584 B1**
(45) Veröffentlichungstag und Bekanntmachung des Hinweises auf die Patenterteilung: **07.12.2016**
(21) Anmeldenummer: 09005145.9
(22) Anmeldetag: 08.04.2009
(51) Int. Cl.: B64C 1/20, B64D 11/06

(54) **Befestigungsschiene für Flugzeugsitze**
Attachment rail for airplane seats
Rail de fixation pour sièges d'avion

(30) Priorität: 12.04.2008 DE 102008018542
(43) Veröffentlichungstag der Anmeldung: 14.10.2009
(73) Patentinhaber: Damm, Hans, 76473 Iffezheim (DE)
(72) Erfinder:
(74) Vertreter: Petersen, Frank

(56) Entgegenhaltungen:
- EP-A2- 0 260 726
- DE-A1-102004 039 189
- US-A1- 2006 088 725

## Beschreibung

Die Erfindung betrifft eine Befestigungsschiene aus Aluminium oder einer Aluminiumlegierung für Flugzeugsitze, an der Flugzeugsitze insbesondere mittels korrespondierender Anker zu befestigen sind.

Der Boden eines Flugzeuges besteht aus Metallstreben, die an dem Flugzeugrumpf befestigt sind und die mit Bodenplatten überdeckt werden. Da die Bodenplatten aber nicht die nötige Stabilität aufweisen, lassen sich Flugzeugsitze, die eine feste Verbindung mit der Unterkonstruktion benötigen, nicht an beliebigen Stellen auf dem Flugzeugboden anbringen. Demgemäß ist es bekannt, speziell ausgebildete Sitzschienen am Flugzeugboden für die Montage von Flugzeugsitzen vorzusehen. In bzw. an diesen Sitzschienen werden dann die Flugzeugsitze mittels korrespondierenden Ankern montiert, zu denen im Rahmen dieser Erfindung auch Bolzen und Klemmbeschläge gerechnet werden.

Da in Flugzeugkabinen je nach Fluggesellschaft und/oder Einsatzzweck die Flugzeugsitze einen unterschiedlichen Sitzabstand haben, werden nicht nur fixe Befestigungspunkte vorgesehen sondern Schienen, entlang derer die Flugzeugsitze bedarfsgerecht verschoben werden können.

Beim Ein- oder Ausbau eines Flugzeugsitzes werden die Anker bzw. entsprechende Arretierungen wie Bolzen, Klemmbeschläge etc. gelöst und der Flugzeugsitz wird dann üblicherweise entlang der Befestigungsschiene verschoben, bis er an deren Ende ausgebaut oder aber an einer vorgesehenen Stelle fixiert wird.

Es hat sich dabei herausgestellt, dass bei diesem Verschieben an der Oberfläche der Befestigungsschiene vorhandene Beschichtungen wie Lackierungen, Pulverbeschichtungen, Eloxierschichten etc. durch sich verkantenden Füße der Flugzeugsitze beschädigt werden. Aufgrund der dabei entstehenden Unebenheiten wird dadurch im Folgenden eine leichte Verschiebbarkeit der Flugzeugsitze behindert.

Außerdem haben die Beschichtungen neben optischen Aspekten auch eine Schutzfunktion für die Befestigungsschienen, die an den beschädigten Stellen der Beschichtung nicht mehr gewährleistet ist.

Um daher die Verschleißfestigkeit der Befestigungsschienen zu verbessern, ist es z.B. aus der US 2006/088725 A1 bekannt, dass die Befestigungsschiene mindestens an ihren mit einem Flugzeugsitz oder mit entsprechenden Ankern korrespondierenden Flächen mit einer Hartcoatierung versehen ist.

Dem liegt die Erkenntnis zugrunde, dass mit einer entsprechenden Hartcoatierung die ursprüngliche Aluminiumoberfläche erheblich verschleißfester wird, da das bei der Hartcoatierung gebildete Aluminiumoxyd (Al2O3) sich auf der Metalloberfläche fest verankert. Diese Aluminiumoxydschicht bildet sich dabei aus dem Aluminium selbst heraus und ist somit extrem fest mit dem Grundmaterial verbunden.

Ein weiterer Vorteil der Hartcoatierung besteht darin, dass die erreichbaren Härten je nach Legierungszusammensetzung der Befestigungsschiene und der bei der Hartcoatierung gewählten Parameter zwischen 300 bis 500 HV (Härte Vickers) erreichen kann, die insbesondere auch über die gesamte Dicke der Hartcoatierung annähernd gleich ist. Die Dicke einer entsprechenden Hartcoatierung liegt zwischen 20 und 150 µm und bevorzugt bei etwa 50 µm.

Bei einer Weiterentwicklung der erwähnten Befestigungsschiene ist diese auf ihrer Oberseite mit einer T-Nut versehen, in die entsprechende Anker von Flugzeugsitzen eingreifen können. Diese T-Nut ist dann an allen Wandungen, an die die Anker angreifen, mit einer entsprechenden Hartcoatierung bedeckt.

Dies hat den Vorteil, dass ein Verschieben von Flugzeugsitzen bei Änderungen einer Kabinenausstattung jetzt leicht möglich wird und insbesondere auch Beschädigungen der Befestigungsschiene nicht mehr auftreten, die ein späteres Verschieben von Flugzeugsitzen behindern.

Es ist dabei auch zu berücksichtigen, dass durch diese Hartcoatierung auch die Spaltkorrosion begrenzt wird, die an den Stellen auftreten kann, an denen Flugzeugsitze an der Befestigungsschiene montiert sind. Die Hartcoatierung ist ausreichend resistent gegen derartige Spaltkorrosion, die in solchen Spalten auftritt und durch Schmutz, verschüttete Flüssigkeiten etc., die in den Spalt gelangen können, begünstigt wird. Außerdem sind derartige Befestigungsstellen ständigen Vibrationen und damit Verschleiß ausgesetzt. All dies wird durch die Hartcoatierung unterbunden.

Gemäß der hier angemeldeten Erfindung weisen die Befestigungsschienen wenigstens einen Stromleiter auf, wobei es wesentlich ist, dass die Hartcoatierung die Flächen zwischen Befestigungsschiene und Stromleiter bedeckt.

Dieser Erfindung liegt die Erkenntnis zugrunde, dass eine Hartcoatierung nicht nur einen hervorragenden Verschleißschutz bildet sondern außerdem elektrisch isolierend ist.

Die Erfindung erfüllt damit die Aufgabe, das normalerweise durch die Isolierung eines entsprechenden Stromleiters verursachte Gewicht einzusparen.

Außerdem kann mit der Verlegung eines Stromleiters an der Befestigungsschiene an jeder beliebigen Stelle der Befestigungsschiene über einen mit dem wenigstens einen Stromleiter korrespondierenden Abnehmer, der an einem Flugzeugsitz befestigt ist, der Flugzeugsitz an eine Bordversorgung angeschlossen werden. Der Flugzeugsitz kann damit beispielsweise mit elektrischer Energie oder aber auch mit (analogen oder digitalen) Informationsdaten versorgt werden.

Auf diese Weise können auch separate Leitungen eingespart werden, die bisher üblicherweise vorgesehen werden, um einen Flugzeugsitz an unterschiedlichen Positionen mit dem Bordnetz des Flugzeugs verbinden zu können.

Bei einer bevorzugten Ausführungsform der Erfindung wird der vorgesehene wenigstens eine Stromleiter insbesondere innerhalb der T-Nut der Befestigungsschiene angeordnet. Auf diese Weise kann der Stromleiter vor unbeabsichtigter mechanischer Beschädigung geschützt werden.

Es ist aber auch im Rahmen der Erfindung, mehrere Stromleiter an der Befestigungsschiene vorzusehen. Abgesehen davon, dass über mehrere Leiter unterschiedliche Funktionen geführt werden können (Versorgung mit elektrischer Energie einerseits, Versorgung mit Informationsdaten andererseits), können auf diese Weise auch "Plus"- und "Minus"-Kontakte zu einem Stromkreislauf an einer Schiene realisiert werden und es müssen hierfür nicht zwei Schienen vorgesehen werden.

Die Stromleiter werden vorzugsweise bündig in eine Oberfläche der Befestigungsschiene integriert, so dass sie besonders gut vor mechanischen Beschädigungen geschützt sind.

Weitere Vorteile und Merkmale der Erfindung ergeben sich aus der nachfolgenden Beschreibung eines Ausführungsbeispiels. Dabei zeigt:

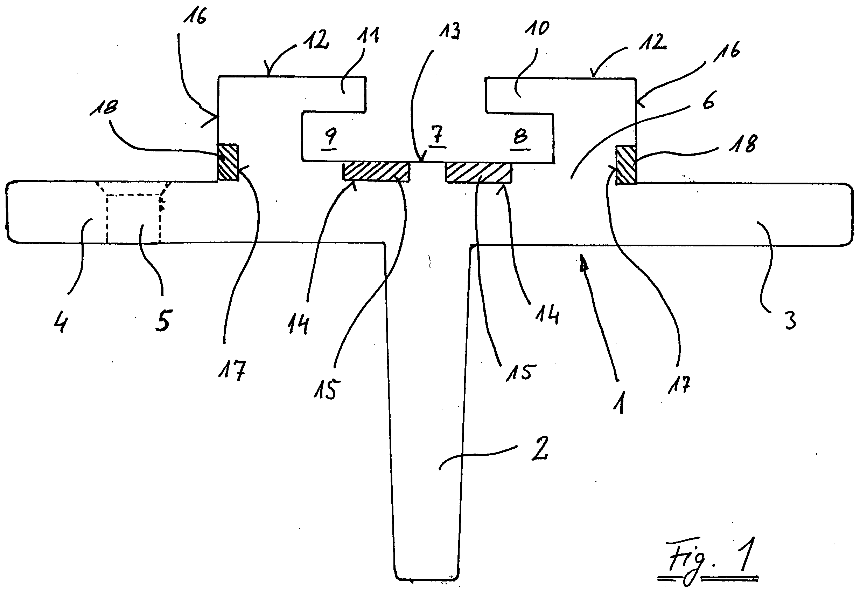

Figur 1 den Schnitt durch eine erfindungsgemäße Befestigungsschiene, die mehrere Stromleiter aufweist.

In Figur 1 erkennt man den Schnitt durch eine erfindungsgemäße Befestigungsschiene 1.

Diese Befestigungsschiene weist auf ihrer Unterseite einen etwa mittig angeordneten Steg 2 auf, über den die Biegesteifigkeit der Befestigungsschiene in bekannter Weise erhöht wird.

Seitlich ist die Befestigungsschiene mit Flanschen 3, 4 versehen, über die sie mit einer hier nicht näher dargestellten Bodenkonstruktion einer Flugzeugkabine verbunden wird. Hierzu sind in den Flanschen in bedarfsgerechten Abständen Bohrungen 5 vorgesehen, durch die hindurch zur Befestigung dienende Schrauben oder Nieten geführt werden.

Auf ihrer Oberseite weist die Befestigungsschiene 1 in ihrem Schienenkörper 6, an denen der Steg 2 und die Flansche 3, 4 einstückig angeformt sind, eine nach oben offene T-Nut 7 auf. Diese T-Nut weist seitliche Hinterschneidungen 8, 9 auf, die nach oben durch Haltevorsprünge 10, 11 begrenzt werden.

Die Haltevorsprünge 10, 11 gehen dabei an ihrer Oberseite in die Aufsitzfläche 12 über, die damit die Oberseite der Befestigungsschiene bildet. Die Aufsitzfläche 12 ist mit einer Hartcoatierung in einer Dicke von etwa 50 µm versehen, die eine Härte zwischen 300 und 500 HV (Härte Vickers) aufweist.

Auf dieser Aufsitzfläche 12 sitzen Flugzeugsitze mit (nicht dargestellten) Füßen oder Kufen auf. Aufgrund der hohen Härte der Aufsitzfläche 12 können diese entlang der Befestigungsschiene 1 verschoben werden, ohne dabei die Aufsitzfläche 12 zu verkratzen o.ä.

Auch die Seitenflächen der Hinterschneidungen 8, 9 sowie die Unterseiten der Haltevorsprünge 10, 11 sind mit einer entsprechenden Hartcoatierung versehen. Damit können die (nicht dargestellten) Füße der Flugzeugsitze über entsprechende Anker in die T-Nut 7 eingreifen. Die mit diesen Ankern korrespondierenden Flächen der T-Nut 7 sind so also ebenfalls vor einem Verschleiß geschützt.

Insbesondere ist im hier dargestellten Beispiel aber auch die Bodenfläche 13 der Nut 7 mit einer entsprechenden Hartcoatierung versehen, wobei diese Hartcoatierung auch die Wände und den Boden einer in die Bodenfläche 13 eingeformten Bodennut 14 flächig bedeckt. In diese Bodennut 14 sind bei dem hier dargestellten Ausführungsbeispiel zwei metallische, schienenartige Stromleiter 15 eingesetzt, wobei über die Hartcoatierung an den Wandungen und der Bodenfläche der Bodennut 14 sichergestellt ist, dass diese Stromleiter gegenüber dem Schienenkörper 6 elektrisch isoliert sind.

In dem hier dargestellten Beispiel sind auch an den seitlichen Außenwänden 16 des Schienenkörpers 6 Hartcoatierungen flächig aufgebracht, die dabei auch die Wand und Bodenflächen von Ecknuten 17 bedeckten, die im unteren Bereich der seitlichen Außenwände 16 in den Schienenkörper 6 eingeformt sind. Auch in diese Ecknuten 17 sind metallische schienenartige Stromleiter 18 eingesetzt, die wiederum über die Hartcoatierung elektrisch vom Schienenkörper 6 isoliert sind.

Die Stromleiter 15 und 18 sind geeignet, um über sie einen an der Befestigungsschiene befestigten Flugzeugsitz mit elektrischer Energie oder Daten zu versorgen, wozu in den Fuß des Flugzeugsitzes entsprechende Kontaktelemente integriert sind, die mit den Stromleitern 15, 18 entsprechend korrespondieren.

Man erkennt in dem hier dargestellten Beispiel, dass die Stromleiter 15 und 18 mit ihren Oberseiten bündig in die Bodenfläche 13 der T-Nut 7 bzw. die seitliche Außenwand 16 des Schienenkörpers 6 eingepasst sind. Sie sind damit besonders gut vor mechanischen Beschädigungen geschützt und können dennoch leicht durch die entsprechenden Kontakte in Füßen von Flugzeugsitzen erreicht werden.

Während die Befestigungsschiene selbst insbesondere als Strangpressprofil aus einem Aluminium oder einer Aluminiumlegierung hergestellt ist, können die schienenartigen Stromleiter insbesondere auch aus Kupfer, Bronze oder anderen gut stromleitenden und oxidationsresistenten Materialien hergestellt werden.

Die hier beschriebene Befestigungsschiene hat den besonderen Vorteil, dass durch sie nicht nur eine problemlose Verschiebung von auf ihr montierten Flugzeugsitzen möglich ist sondern dass sie gleichzeitig benutzt werden kann, um diese Flugzeugsitze elektrisch anzuschließen, wobei dies aufgrund von einsparbaren Isolierungen sehr gewichtssparend möglich ist.

## Patentansprüche

1. Befestigungsschiene (1) aus Aluminium oder einer Aluminiumlegierung, an der Flugzeugsitze mittels korrespondierender Anker zu befestigen sind, wobei die Befestigungsschiene (1) mindestens an ihren mit einem Flugzeugsitz oder mit Ankern korrespondierenden Flächen (12) mit einer Hartcoatierung versehen ist,
**dadurch gekennzeichnet,**
**dass** die Befestigungsschiene (1) wenigstens einen Stromleiter (15, 18) aufweist, wobei die Hartcoatierung die Flächen (13, 16) zwischen Befestigungsschiene (1) und dem wenigstens einen Stromleiter (15, 18) bedeckt.

2. Befestigungsschiene gemäß Anspruch 1,
**dadurch gekennzeichnet,**
**dass** sie auf ihrer Oberseite mit einer T-Nut (7) versehen ist, in die Anker von Flugzeugsitzen eingreifen können, wobei die Hartcoatierung die Wandung der T-Nut (7) bedeckt.

3. Befestigungsschiene gemäß Anspruch 2,
**dadurch gekennzeichnet,**
**dass** der Stromleiter (15) innerhalb der T-Nut (7) angeordnet ist.

4. Befestigungsschiene gemäß Anspruch 1,
**dadurch gekennzeichnet,**
**dass** mehrere Stromleiter (15, 18) vorgesehen sind.

5. Befestigungsschiene gemäß Anspruch 1,
**dadurch gekennzeichnet,**
**dass** der Stromleiter (15, 18) bündig in eine Oberfläche (13, 16) der Befestigungsschiene (1) integriert ist.

## Claims

1. Fastening rail (1) which is made of aluminium or of an aluminium alloy and on which aircraft seats can be fastened by means of corresponding anchors, wherein the fastening rail (1) is provided with a hard coating at least on its surfaces (12) which correspond with an aircraft seat or with anchors,
**characterized in that**
the fastening rail (1) has at least one conductor (15, 18), wherein the hard coating covers the surfaces (13, 16) between the fastening rail (1) and the at least one conductor (15, 18).

2. Fastening rail according to Claim 1,
**characterized in that**
it is provided, on its upper side, with a T-shaped groove (7), in which anchors of aircraft seats can engage, wherein the hard coating covers the wall of the T-shaped groove (7).

3. Fastening rail according to Claim 2,
**characterized in that**
the conductor (15) is arranged within the T-shaped groove (7).

4. Fastening rail according to Claim 1,
**characterized in that**
a plurality of conductors (15, 18) are provided.

5. Fastening rail according to Claim 1,
**characterized in that**
the conductor (15, 18) is integrated flush in a surface (13, 16) of the fastening rail (1).

## Revendications

1. Rail de fixation (1) en aluminium ou en un alliage d'aluminium, auquel des sièges d'aéronefs doivent être fixés au moyen de pièces d'ancrage adéquates, ledit rail de fixation (1) étant pourvu d'un revêtement dur, au moins sur ses surfaces (12) concordant avec un siège d'aéronef ou avec des pièces d'ancrage,
**caractérisé par le fait**
**que** ledit rail de fixation (1) comporte au moins un conducteur électrique (15, 18), le revêtement dur recouvrant les surfaces (13, 16) situées entre ledit rail de fixation (1) et ledit conducteur électrique (15, 18) à présence minimale.

2. Rail de fixation selon la revendication 1,
**caractérisé par le fait**
**qu'**il est muni, à sa face supérieure, d'une rainure (7) en T dans laquelle des pièces d'ancrage de sièges d'aéronefs peuvent pénétrer, le revêtement dur recouvrant la paroi de ladite rainure (7) en T.

3. Rail de fixation selon la revendication 2,
**caractérisé par le fait**
**que** le conducteur électrique (15) est logé à l'intérieur de la rainure (7) en T.

4. Rail de fixation selon la revendication 1,
**caractérisé par le fait**
**que** plusieurs conducteurs électriques (15, 18) sont prévus.

5. Rail de fixation selon la revendication 1,
**caractérisé par le fait**
**que** le conducteur électrique (15, 18) est intégré, avec affleurement, dans une surface (13, 16) dudit rail de fixation (1).
